# NEUE EUROPÄISCHE PATENTSCHRIFT

(11) **EP 1 291 208 B2**
(45) Veröffentlichungstag und Bekanntmachung des Hinweises auf die Entscheidung über den Einspruch: **07.08.2013**
(45) Hinweis auf die Patenterteilung: 29.03.2006
(21) Anmeldenummer: 02018768.8
(22) Anmeldetag: 22.08.2002
(51) Int. Cl.: B60H 1/22, B60H 1/24

(54) **Elektrische Zusatzheizung für Personenfahrzeuge**
Electric supplementary heater for passenger cars
Chauffage supplementaire électrique pour véhicules

(30) Priorität: 11.09.2001 DE 10144757
(43) Veröffentlichungstag der Anmeldung: 12.03.2003
(73) Patentinhaber: Webasto AG, 82131 Stockdorf (DE)
(72) Erfinder: Stemmler, Martin, Dr., 86929 Penzing (DE); Nothen, Michael, 83623 Dietramszell (DE); Pfanzelt, Hans, 87675 Rettenbach (DE)
(74) Vertreter: Ciesla, Dirk

(56) Entgegenhaltungen:
- DE-A- 3 513 049
- DE-A1- 3 513 049
- DE-A1- 3 638 243
- DE-A1- 19 752 676
- DE-A1- 19 804 812
- DE-C- 19 923 189
- DE-C1- 19 729 899
- GB-A- 952 953
- JP-A- 6 008 110
- JP-A- H0 370 621
- JP-A- S6 280 122
- JP-A- H05 169 967
- US-A- 4 562 957
- US-A- 4 562 957
- PATENT ABSTRACTS OF JAPAN vol. 009, no. 121 (M-382), 25. Mai 1985 (1985-05-25) & JP 60 008110 A (NIPPON DENSO KK), 17. Januar 1985 (1985-01-17)
- PATENT ABSTRACTS OF JAPAN vol. 006, no. 039 (M-116), 10. März 1982 (1982-03-10) & JP 56 154307 A (NIPPON SOKEN INC), 28. November 1981 (1981-11-28)

## Beschreibung

Die Erfindung betrifft ein Personenfahrzeug mit einer Zusatzheizung, die einen Heizkörper aufweist, der im Betrieb der Zusatzheizung von Heizluft durchströmt wird, und die mindestens eine Luftaustrittsöffnung aufweist, welche im Fußbereich eines Fahrgastraumes des Personenfahrzeugs angeordnet ist und zu der die Heizluft geleitet werden kann. Ferner betrifft die Erfindung eine Türe eines Personenfahrzeugs mit einer Zusatzheizung, die einen Heizkörper aufweist, der im Betrieb der Zusatzheizung von Heizluft durchströmt wird, und die mindestens eine Luftaustrittsöffnung aufweist, zu der die Heizluft geleitet werden kann.

Bei der Temperierung eines Fahrgastraumes bei einem Personenfahrzeug besteht sein langem das Problem, dass einerseits gezielt Temperaturunterschiede geschaffen und andererseits solche zu vermeiden sind. Beispielsweise soll im Fahrgastraum zwischen dem Kopf- und dem Fußbereich eine Temperaturdifferenz bestehen, welche den Fahrer einen klaren Kopf behalten lässt und ihm zugleich kalte Füße erspart. Bei mehreren Sitzreihen im Fahrzeug müssen andererseits auch die Sitze im Fond ausreichend mit Heizluft versorgt werden. Zwischen einer vorderen und einer hinteren Sitzreihe sollten innerhalb einer horizontalen Luftschicht also keine merklichen Temperaturunterschiede bestehen.

Aus der DE-A-36 38 243 ist eine gattungsgemäße Zusatzheizung für Personenfahrzeuge bekannt, bei der eine Heizeinrichtung vorgesehen ist, um den Fond eines Fahrgastraumes zusätzlich zu beheizen und dabei auch Seitenscheiben beschlagfrei und eisfrei zu halten. Die Zusatzheizung ist mit einem Gebläse versehen, das Luft aus dem Fahrgastraum ansaugt und durch einen Heizkörper fördert. Der Heizkörper ist über ein Vorlauf- und ein Rücklaufrohr an den Kühlkreislauf eines Verbrennungsmotors angeschlossen. Bei modernen, verbrauchsoptimierten Verbrennungsmotoren reicht die über den Kühlkreislauf bereitgestellte Wärme nicht mehr aus, um genügend Heizluft für eine angemessene Temperierung eines Fahrgastraumes bereitzustellen.

Aus der DE-A-19 80 4812 ist eine Klimaanlage für ein Fahrzeug bekannt, bei der in einem Klimatisierungsgehäuse eines zentralen Lüftungs- und Heizungsaggregats zwei Luftkanäle angeordnet sind, von denen einer zu einem Kopfraum-Öffnungsbereich und der zweite zu einem Fußraum-Öffnungsbereich führt. Im Luftkanal zum Fußraum-Öffnungsbereich ist eine elektrische Hilfsheizeinrichtung angeordnet, mittels der eine Temperaturdifferenz zwischen der im Kopfraum-Öffnungsbereich und der im Fußraum-Öffnungsbereich ausgeblasenen Luft erreicht werden soll, ohne einen Kühlluft-Bypasskanal zu benötigen. Mit einer solchen Klimaanlage kann im Wesentlichen nur für eine vordere Sitzreihe in einem Fahrgastraum die Klimatisierung verbessert werden. Für dahinter angeordnete Sitzreihen ergeben sich weiterhin die oben genannten Probleme.

Für Luftaustrittsöffnungen an Front- und Seitenscheiben ist es aus der DE-C-42 13 510 und der JP-A-56 154 307 bekannt, ein Lüftungsgitter der Luftaustrittsöffnung selbst als PTC-Heizelement (Heizelement mit positivem Temperaturkoeffizienten) auszubilden. Es sind auch anders gestaltete elektrische Heizungen an Luftaustrittsöffnungen einer Heiz- und Lüftungsanlage in einem Personenfahrzeug bekannt. Beispielsweise beschreiben die JP-A-58 115 605 und die JP-A-55 56 766 je eine Luftaustrittsöffnung mit einem Luftkanal, an dem zusätzlich zu einem Lüftungsgitter mit Luftleitflächen ein elektrisches Heizelement vorgesehen ist. Aus JP-A-60 008 110 ist ein Luftzuführkanal zum oberen Abschnitt einer Türverkleidung bekannt, in dem ein PTC-Heizelement angeordnet ist. Solche Heizelemente sind dazu vorgesehen die Front- und Seitenscheiben beschlagfrei zu halten, solange der erst gestartete Verbrennungsmotor noch nicht genügend Wärme über seinen Kühlkreislauf bereitstellen und einen effektiven Heizbetrieb ermöglichen kann.

Es handelt sich um Luftaustrittsöffnungen eines zentralen Lüftungs- und Heizungsaggregates, welches die eigentliche Temperierung des Fahrgastraumes übernimmt. Die beim Anblasen der Scheiben erforderliche Wärmeenergie ist verhältnismäßig gering und trägt zur Temperierung des Fahrgastraumes nicht wesentlich bei. Soweit durch das Anblasen der Scheiben Wärme zugeführt wird, geschieht dies im oberen Bereich des Fahrgastraumes. Der obere Bereich des Fahrgastraumes sollte aber, wie oben erläutert, gerade nicht beheizt werden.

Aus US-A-45 62 957 ist eine Klimaanlage bekannt, bei der unter oder über einer Lenksäule zusätzlich eine Luftaustrittsöffnung mit einem dahinter angeordneten PTC-Heizelement vorgesehen ist. Durch die Luftaustrittsöffnung soll gezielt warme Luft zu den Händen oder ins Gesicht eines Fahrers des zugehörigen Personenfahrzeugs geleitet werden.

Aus DE-A-35 13 049 ist eine Fahrzeugtüre für ein Personenfahrzeug bekannt, in der unter anderem Luftaustrittsöffnungen vorgesehen sind, die im Bereich des Sitzpolsters eines daneben angeordneten Fahrzeugsitzes liegen.

Aus DE-C-19 92 31 89 ist eine Klimaanlage zur Klimatisierung des Fonds einer Fahrgastzelle bekannt, bei der hinter den Vordersitzen Zuführkanäle vorgesehen sind. Unter anderem ist hinter jedem Vordersitz im Fußraum des Fonds ein Verdampfer und ein Wärmetauscher angeordnet. Von dem Verdampfer und dem Wärmetauscher wird entsprechend klimatisierte Luft zu Luftausströmem befördert, welche im Fußraum des Fonds angeordnet sind.

Der Erfindung liegt die Aufgabe zugrunde, ein Personenfahrzeug sowie eine Türe eines Personenfahrzeugs mit einer Zusatzheizung zur Verfügung zu stellen, bei dem bzw. der auf flexible Weise eine vertikale Temperaturschichtung im Fahrgastraum erzeugt werden kann, die insbesondere auch an Sitzen im Fond als angenehm empfunden wird.

Diese Aufgabe ist erfindungsgemäß mit einem Personenfahrzeug gemäß Anspruch 1 und einer Türe gemäß Anspruch 7 gelöst. Vorteilhafte Weiterbildungen der Erfindung sind in den abhängigen Ansprüchen beschrieben.

Ferner wird erfindungsgemäß nicht irgendein elektrisches Heizelement verwendet, sondern es wird gezielt ein PTC-Heizelement eingesetzt. Ein solches Heizelement mit positivem Temperaturkoeffizient weist die Eigenschaft auf, dass es seine Heizleistung selbsttätig an die abgeführte Wärmemenge anpasst. Das PTC-Heizelement verbraucht stets soviel elektrische Energie, wie es als Wärmeleistung an die Heizluft abgibt. Ein PTC-Heizelement erfordert daher keine eigene Steuerung seiner Heizleistung. Erfindungsgemäß ist es vielmehr möglich die Heizleistung über die durch das PTC-Heizelement geförderte Heizluftmenge zu steuern. Bei der erfindungsgemäßen Zusatzheizung kann daher die Heizleistung an unterschiedlichen Luftaustrittsöffnungen durch entsprechende Luftmengenregelung gesteuert werden. Beispielsweise kann über eine Klappe die von einem Heizluftgebläse geförderte Luft auf zwei Luftaustrittsöffnungen aufgeteilt werden, wo sie dann in Abhängigkeit der Heizleistung des dort verbauten PTC-Heizelementes und der geförderten Luftmenge zu einer gewünschten Erwärmung des Fußraumes beiträgt.

Mit der erfindungsgemäßen Zusatzheizung kann grundsätzlich eine kurzfristige Aufheizung des Fahrgastraumes erzielt werden. Der eigentliche Sinn der Zusatzheizung liegt aber darin, dass sie während des gesamten Fahrbetriebes den Fahrgastraum beheizt und klimatisiert. Vor allem in diesem Punkt unterscheiden sich die erfindungsgemäßen PTC-Heizelemente von den in der DE 42 13 510 C1 beschriebenen Heizelementen. Die elektrische Energie für die PTC-Heizelemente wird erfindungsgemäß von einem Generator an dem Verbrennungsmotor des Personenfahrzeugs abgegriffen. Alternativ wäre eine Stromversorgung über ein Festnetz beispielsweise zum Vorwärmen des Fahrgastraumes denkbar, wenn die erfindungsgemäße Zusatzheizung als Standheizung modifiziert wird.

Erfindungsgemäß sind die Luftaustrittsöffnung sowie das PTC-Heizelement im unteren Abschnitt einer Türe des Personenfahrzeugs angeordnet. Eine solche Anordnung erlaubt es den Fahrgastraum von der Außenseite her zu erwärmen, eben an der Seite, an der auch Wärme durch die Fahrzeughaut abgeführt wird.

Einer solchen Luftaustrittsöffnung wird erfindungsgemäß Luft über ein Heizluftgebläse zugeführt, welches unabhängig von einem zentralen Lüftungs- oder Heizungsaggregat Heizluft zum Heizelement fördern kann. Das Beheizen über die außenseitige Zusatzheizung kann damit separat gesteuert werden. So kann beispielsweise das Heizluftgebläse beim Öffnen der Türe mit Hilfe eines Türkontaktes abgeschaltet werden, um den Energieverbrauch der Zusatzheizung zu verringern und unangenehmen Luftzug beim Einsteigen zu vermeiden.

Eine besonders platzsparende Ausgestaltung der erfindungsgemäßen Zusatzheizung kann geschaffen werden, indem das Heizluftgebläse ebenfalls in der Türe des Personenfahrzeugs anordenbar ist.

Nachfolgend werden Ausführungsbeispiele von Zusatzheizungen anhand der beigefügten schematischen Zeichnungen näher erläutert. Es zeigt:
- Fig. 1: eine perspektivische Ansicht einer Türe eines Personenfahrzeugs mit einem ersten Ausführungsbeispiel einer erfindungsgemäßen Zusatzheizung,
- Fig. 2: eine perspektivische Ansicht der Innenseite einer Türverkleidung der Türe gemäß Fig. 1,
- Fig. 3: eine perspektivische Ansicht eines Bodenabschnitts eines Personenfahrzeugs mit einem zweiten Ausführungsbeispiel einer nicht erfindungsgemäßen Zusatzheizung, und
- Fig. 4: eine perspektivische Ansicht einer Mittelkonsole eines Personenfahrzeugs mit einem dritten Ausführungsbeispiel einer nicht erfindungsgemäßen Zusatzheizung.

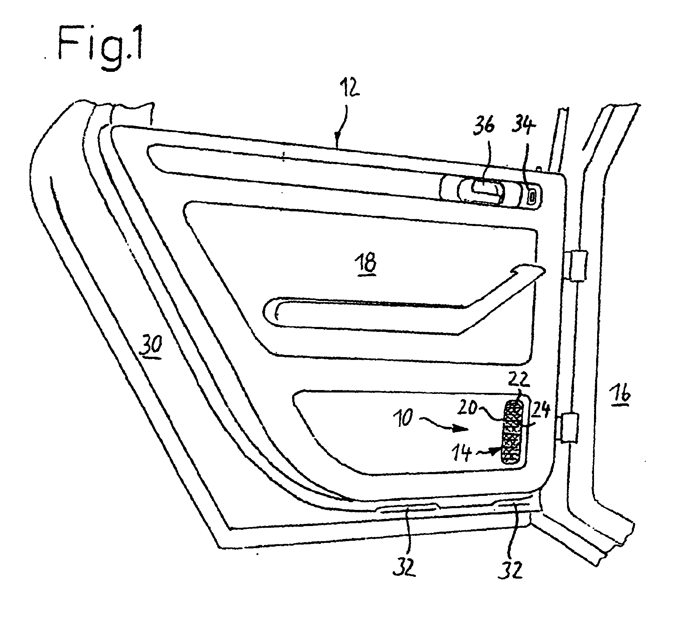

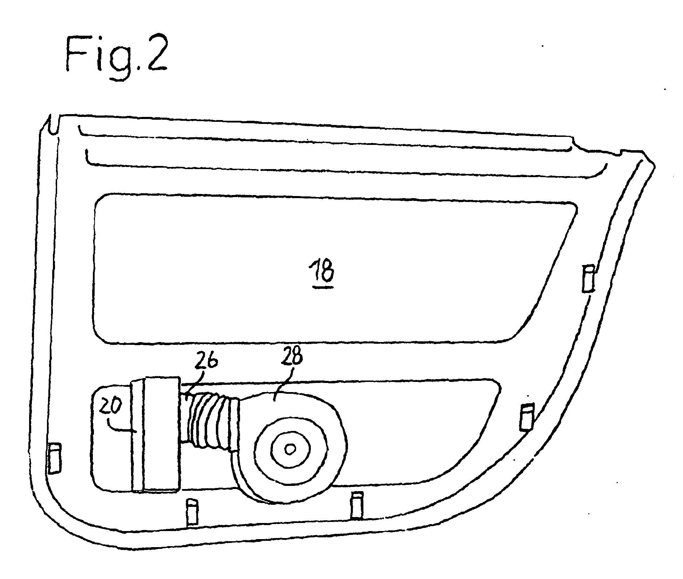

Eine in den Fig. 1 und 2 dargestellte Zusatzheizung 10 ist in einer hinteren Türe 12 am Fahrgastraum eines nicht näher dargestellten Personenfahrzeugs in Gestalt eines PKW angeordnet.

Wesentliches Bauteil der Zusatzheizung 10 ist eine Luftaustrittsöffnung 14 im unteren Teil der Türe 12. Dieser Teil der Türe 12 befindet sich bei geschlossener Türe neben einem Fußbereich 16 an einem nicht dargestellten Sitz im Fond des Personenfahrzeugs.

Die Luftaustrittsöffnung 14 ist in einer Türverkleidung 18 der Türe 12 als schlitzförmige Öffnung von etwa 5 cm mal 15 cm Größe ausgebildet. Die Öffnung ist mit einem Kunststoffrahmen 20 eingefasst, in dem ein in Fig. 1 durch Schraffur angedeutetes PTC-Heizelement 22 angeordnet ist. Vor dem PTC-Heizelement 22 befinden sich beweglich und insbesondere kippbar gelagerte Lamellen 24, mit denen ein Insasse auf dem Sitz die Luftaustrittsöffnung 14 im wesentlichen luftdicht verschließen kann.

An der Innenseite der Türverkleidung 18, die in Fig. 2 dargestellt ist, ist am Kunststoffrahmen 20 ein Heizluftkanal 26 angeordnet, der von einem Heizluftgebläse 28 mit Heizluft versorgt wird. Das Heizluftgebläse 28 saugt die Heizluft durch den Innenraum zwischen einer Türaußenhaut 30 und der Türverkleidung 18 insbesondere durch zwei Ansaugöffnungen 32 am unteren Rand der Türe 12 aus dem Fußbereich 16 am Sitz an. Bei einem nicht dargestellten Ausführungsbeispiel wird die Luft aus der Umgebung des Personenfahrzeugs angesaugt.

Die Zusatzheizung 10 gemäß Fig. 1 und 2 bildet eine Heizung, die von einem zentralen Lüftungs- und Heizungsaggregat unabhängig ist und mit der reaktionsschnell und auf besonders einfache Weise eine Temperaturschichtung im Fahrgastraum geschaffen werden kann. Während die Zusatzheizung 10 im Fußbereich 16 Warmluft zuführt, bleiben höher liegende Luftschichten kühl. Die Heizluft wird insbesondere unterhalb der Knie eines Insassen zugeführt, so dass mit der Zusatzheizung 10 nur der volumenmäßig kleine Raum um die Füße und Unterschenkel aufgeheizt werden muss.

Um die Zusatzheizung 10 steuern zu können, ist lediglich ein Schalter 34 für das Heizluftgebläse 28 erforderlich. Dieser ist beim dargestellten Ausführungsbeispiel neben einem Türöffner 36 der Türe 12 angeordnet. Im Bedienbereich des Fahrers des Personenfahrzeugs ist ein weiterer, nicht dargestellter Schalter angeordnet, so dass auch der Fahrer die Zusatzheizung 10 betätigen kann.

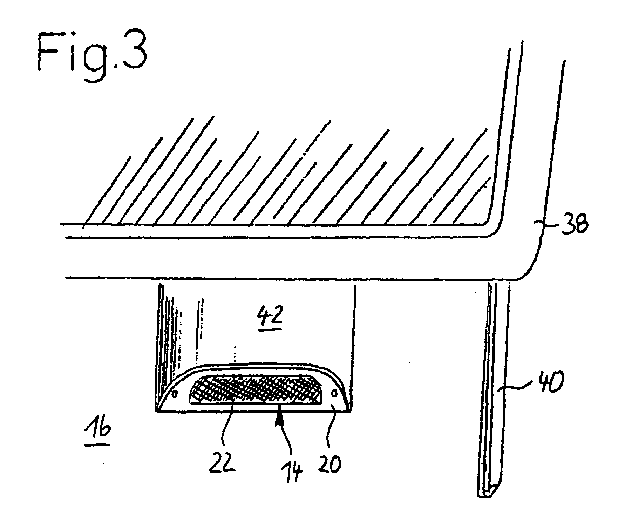

In Fig. 3 ist ein Ausführungsbeispiel einer Zusatzheizung 10 veranschaulicht, bei der eine Luftaustrittsöffnung 14 unter einem Fahrersitz 38 eines Personenfahrzeugs angeordnet und zum Fußbereich 16 eines sich dahinter befindenden, nicht dargestellten Beifahrersitzes gerichtet ist. Die Luftaustrittsöffnung 14 ist ebenfalls mit einem Kunststoffrahmen 20 eingefasst, in dem ein PTC-Heizelement 22 in Gestalt mehrerer Heizwaben eingesetzt ist.

Die Luftaustrittsöffnung 14 befindet sich in Längsrichtung des Personenfahrzeugs etwa in der Mitte einer Sitzverstellschiene 40 des Fahrersitzes 38. In Querrichtung zum Personenfahrzeug ist die Luftaustrittsöffnung 14 in der Mitte des Fahrersitzes 38 angeordnet. Die Luftaustrittsöffnung 14 bildet den Endbereich eines Heizluftkanals 42, der von einem nicht dargestellten zentralen Lüftungs- und Heizungsaggregat bis unter den Fahrersitz 38 führt.

Die Zusatzheizung 10 gemäß Fig. 3 heizt die vom Lüftungs- und Heizungsaggregat zugeführte Luft zusätzlich auf und ermöglicht selbst eine Beheizung des Fond, während der Bereich um den Fahrer gekühlt wird. So kann zum Beispiel ein schlafender Beifahrer ausreichend mit Warmluft versorgt werden, während dem Fahrer, der auf jeden Fall am Einschlafen gehindert werden soll, kühle Luft zugeführt wird.

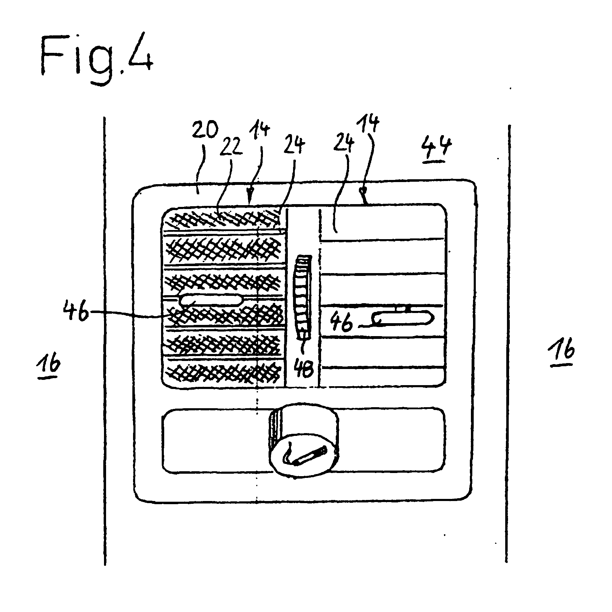

In Fig. 4 ist ein Ausführungsbeispiel dargestellt, bei dem im Fußbereich 16 eines Fahrgastraumes eine herkömmliche Mittelkonsole 44 vorgesehen und mit einem PTC-Heizelement 22 an einer Luftaustrittsöffnung 14 versehen ist.

Die Luftaustrittsöffnung 14 ist mit einem Kunststoffrahmen 20 eingefasst, in dem ferner PTC-Heizelemente 22 gehaltert sind. Vor den PTC-Heizelementen 22 sind Lamellen 24 beweglich angeordnet, die mit Hilfe eines Griffes 46 gekippt und geschwenkt werden können. An der Luftaustrittsöffnung 14 ist ferner ein Stellrad 48 angeordnet, mit dem die Luftzuführung zur Luftaustrittsöffnung 14 insgesamt im wesentlichen luftdicht verschlossen werden kann.

Um die Zusatzheizung gemäß Fig. 4 herunterzuregeln, muss ein Insasse des Personenfahrzeugs lediglich über das Stellrad 48 die Luftzufuhr unterbinden. Das PTC-Heizelement, an dem dann keine Wärme mehr abgeführt wird, regelt seine Leistungsaufnahme in einem solchen Fall selbsttätig ab.

Die Luftzuführung selbst erfolgt auch bei der Luftaustrittsöffnung 14 gemäß Fig. 4 von einem zentralen Lüftungs- und Heizungsaggregat. Alternativ kann bei den Zusatzheizungen 10 gemäß Fig. 3 oder 4 eine separate Luftzuführung vorgesehen sein, wie sie mit dem Heizluftgebläse 28 geschaffen ist.

### Bezugszeichenliste

- 10: Zusatzheizung
- 12: Türe
- 14: Luftaustrittsöffnung
- 16: Fußbereich
- 18: Türverkleidung
- 20: Kunststoffrahmen
- 22: PTC-Heizelement
- 24: Lamellen
- 26: Heizluftkanal
- 28: Heizluftgebläse
- 30: Türaußenhaut
- 32: Ansaugöffnung
- 34: Schalter
- 36: Türöffner
- 38: Fahrersitz
- 40: Sitzverstellschiene
- 42: Heizluftkanal
- 44: Mittelkonsole
- 46: Griff
- 48: Stellrad

## Patentansprüche

1. Personenfahrzeug mit einer Zusatzheizung (10), die einen Heizkörper aufweist, der im Betrieb der Zusatzheizung (10) von Heizluft durchströmt wird, und die mindestens eine Luftaustrittsöffnung (14) aufweist, welche im Fußbereich (16) eines Fahrgastraumes des Personenfahrzeugs angeordnet ist und zu der die Heizluft geleitet werden kann, wobei der Heizkörper ein elektrisches PTC-Heizelement (22) ist und der Heizkörper unmittelbar an der Luftaustrittsöffnung (14) im Fußbereich (16) angeordnet ist,
**dadurch gekennzeichnet, dass**
die Luftaustrittsöffnung (14) sowie das PTC-Heizelement (22) im unteren Abschnitt einer Türe (12) des Personenfahrzeugs angeordnet sind und
ein Heizluftgebläse (28) vorgesehen ist, welches unabhängig von einem zentralen Lüftungs- oder Heizungsaggregat Heizluft zum PTC-Heizelement (22) fördern kann.

2. Personenfahrzeug nach Anspruch 1,
**dadurch gekennzeichnet, dass** das Heizluftgebläse (28) ebenfalls in der Türe (12) des Personenfahrzeugs angeordnet ist.

3. Personenfahrzeug nach einem der Ansprüche 1 oder 2,
**dadurch gekennzeichnet, dass** es mit mindestens zwei nebeneinander angeordneten Sitzen versehen ist und die Luftaustrittsöffnung (14) sowie das PTC-Heizelement (22) an einer Mittelkonsole (44) zwischen den beiden Sitzen angeordnet sind.

4. Personenfahrzeug nach einem der Ansprüche 1 bis 3,
**dadurch gekennzeichnet, dass** es mit mindestens zwei hintereinander angeordneten Sitzen versehen ist und die Luftaustrittsöffnung (14) sowie das PTC-Heizelement (22) unter dem vorderen Sitz (38) angeordnet sind.

5. Personenfahrzeug nach Anspruch 3 oder 4,
**dadurch gekennzeichnet, dass** ein Heizluftkanal (40) vorgesehen ist, durch den von einem zentralen Lüftungs- oder Heizungsaggregat Heizluft zum PTC-Heizelement (22) gefördert werden kann.

6. Personenfahrzeug nach einem der Ansprüche 1 bis 5,
**dadurch gekennzeichnet, dass** in der Luftzuführung zu der Luftaustrittsöffnung (14) eine Schließeinrichtung, insbesondere eine Klappe, angeordnet ist, wobei bei geschlossener Schließeinrichtung bzw. Klappe und unterbrochener Luftzufuhr das PTC-Heizelement abregelt.

7. Türe (12) eines Personenfahrzeugs mit einer Zusatzheizung (10),
die einen Heizkörper aufweist, der im Betrieb der Zusatzheizung (10) von Heizluft durchströmt wird, und
die mindestens eine Luftaustrittsöffnung (14) aufweist, zu der die Heizluft geleitet werden kann,
**dadurch gekennzeichnet, dass**
der Heizkörper ein elektrisches PTC-Heizelement (22) ist, welches unmittelbar an der Luftaustrittsöffnung (14) angeordnet ist, und
die Luftaustrittsöffnung (14) sowie das PTC-Heizelement (22) im unteren Abschnitt der Türe (12) des Personenfahrzeugs angeordnet sind, derart, dass die Luftaustrittsöffnung (14) im Fußbereich (16) eines Fahrgastraumes des Personenfahrzeugs zur Anordnung kommt, und ein Heizluftgebläse (28) vorgesehen ist, welches unabhängig von einem zentralen Lüftungs- oder Heizungsaggregat Heizluft zum PTC-Heizelement (22) fördern kann.

## Claims

1. Passenger vehicle with a supplementary heater (10) comprising a heating body through which heating air flows when the supplementary heater (10) is operating and at least one air outlet opening (14) which is disposed in the footwell (16) of a passenger compartment of the passenger vehicle and to which the heating air can be routed, wherein the heating body is an electrical PTC heating element (22) and the heating body is disposed directly at the air outlet opening (14) in the footwell (16) **characterised in that** the air outlet opening (14) as well as the PTC heating element (22) are disposed in the lower portion of a door (12) of the passenger vehicle and a heating air blower (28) is provided, which blower can deliver heating air to the PTC heating element (22) independently of a central ventilating or heating unit.

2. Passenger vehicle according to Claim 1,
**characterised in that** the heating air blower (28) is also disposed in the door (12) of the passenger vehicle.

3. Passenger vehicle according to either of Claims 1 and 2,
**characterised in that** it is provided with at least two seats disposed side by side, and the air outlet opening (14) as well as the PTC heating element (22) are disposed at a centre console (44) between the two seats.

4. Passenger vehicle according to any one of Claims 1 to 3,
**characterised in that** it is provided with at least two seats disposed one behind the other, and the air outlet opening (14) as well as the PTC heating element (22) are disposed under the front seat (38).

5. Passenger vehicle according to Claim 3 or 4,
**characterised in that** a heating air duct (40) is provided, through which duct heating air can be delivered from a central ventilating or heating unit to the PTC heating element (22).

6. Passenger vehicle according to any one of Claims 1 to 5,
**characterised in that** a closing device, in particular a flap, is disposed in the air supply line to the air outlet opening (14), wherein the PTC heating element regulates downwards when the closing device or flap is closed and the air supply is interrupted.

7. Door (12) of a passenger vehicle with a supplementary heater (10) comprising a heating body through which heating air flows when the supplementary heater (10) is operating and
at least one air outlet opening (14) to which the heating air can be routed,
**characterised in**
**that** the heating body is an electrical PTC heating element (22) which is disposed directly at the air outlet opening (14), and
the air outlet opening (14) as well as the PTC heating element (22) are disposed in the lower portion of the door (12) of the passenger vehicle such that the air outlet opening (14) is disposed in the footwell (16) of a passenger compartment of the passenger vehicle, and a heating air blower (28) is provided, which blower can deliver heating air to the PTC heating element (22) independently of a central ventilating or heating unit.

## Revendications

1. Véhicule de tourisme avec un chauffage supplémentaire (10) qui présente un radiateur qui est traversé par de l'air de chauffage lorsque le chauffage supplémentaire (10) fonctionne, et qui présente au moins un orifice de sortie d'air (14) placé au niveau des pieds (16) d'un espace passager du véhicule de tourisme et vers lequel l'air de chauffage peut être amené, le radiateur étant un élément de chauffage électrique en PTC (22) et le radiateur étant placé directement sur l'orifice de sortie d'air (14) au niveau des pieds (16),
**caractérisé en ce que** l'orifice de sortie d'air (14) ainsi que l'élément de chauffage en PTC (22) sont placés dans la section inférieure d'une portière (12) du véhicule de tourisme et
un ventilateur d'air de chauffage (28) est prévu, lequel peut acheminer de l'air de chauffage à l'élément de chauffage en PTC (22) indépendamment d'un appareil de ventilation ou de chauffage central.

2. Véhicule de tourisme selon la revendication 1,
**caractérisé en ce que** le ventilateur d'air de chauffage (28) est également placé dans la portière (12) du véhicule de tourisme.

3. Véhicule de tourisme selon l'une des revendications 1 et 2,
**caractérisé en ce qu'**il est muni d'au moins deux sièges placés l'un à côté de l'autre et que l'orifice de sortie d'air (14) ainsi que l'élément de chauffage en PTC (22) sont placés sur une console centrale (44) entre les deux sièges.

4. Véhicule de tourisme selon l'une des revendications 1 à 3,
**caractérisé en ce qu'**il est muni d'au moins deux sièges placés l'un derrière l'autre et que l'orifice de sortie d'air (14) ainsi que l'élément de chauffage en PTC (22) sont placés sous le siège avant (38).

5. Véhicule de tourisme selon la revendication 3 ou 4,
**caractérisé en ce qu'**un canal d'air de chauffage (40) est prévu, à travers lequel de l'air de chauffage provenant d'un appareil de ventilation ou de chauffage central peut être acheminé jusqu'à l'élément de chauffage en PTC (22).

6. Véhicule de tourisme selon l'une des revendications 1 à 5,
**caractérisé en ce qu'**un dispositif de fermeture, particulièrement un clapet, est placé dans l'alimentation en air vers l'orifice de sortie d'air (14), l'élément de chauffage en PTC s'arrêtant lorsque le dispositif de fermeture ou le clapet est fermé et que l'alimentation en air est interrompue.

7. Portière (12) d'un véhicule de tourisme avec un chauffage supplémentaire (10) qui présente un radiateur qui est traversé par de l'air de chauffage lorsque le chauffage supplémentaire (10) fonctionne, et qui présente au moins un orifice de sortie d'air (14) vers lequel l'air de chauffage peut être amené,
**caractérisé en ce que** le radiateur est un élément de chauffage électrique en PTC (22) qui est placé directement sur l'orifice de sortie d'air (14) et **en ce que** l'orifice de sortie d'air (14) ainsi que l'élément de chauffage en PTC (22) sont placés dans la section inférieure de la portière (12) du véhicule de tourisme, de façon à ce que l'orifice de sortie d'air (14) soit arrangé au niveau des pieds (16) d'un espace passager du véhicule de tourisme, et un ventilateur d'air de chauffage (28) est prévu, lequel peut acheminer de l'air de chauffage à l'élément de chauffage en PTC (22) indépendamment d'un appareil de ventilation ou de chauffage central.
